# EUROPEAN PATENT APPLICATION

(11) **EP 4 660 739 A1**
(43) Date of publication of application: **10.12.2025**
(21) Application number: 25181057.8
(22) Date of filing: 05.06.2025
(51) Int. Cl.: G05D 7/06, G01F 1/00

(54) **SOFT FLOW SENSING OF MECHANICAL PRESSURE INDEPENDENT CONTROL VALVES (MPICV) WITH MECHANICAL FEATURE CALIBRATION**

(30) Priority: 07.06.2024 CN 202410741044
(71) Applicant: Siemens Schweiz AG, 8047 Zürich (CH)
(72) Inventor: Zhao, Fang, Xibeiwang,Haidian, Beijing City, 100094 (CN); Zhan, Ning, Xibeiwang,Haidian, Beijing City, 100094 (CN); Yang, Zhi Hao, Beijing, 100123 (CN); Zhang, Zheng, Beijing, 100102 (CN); Wang, Xiao Hua, Shenyang, 110034 (CN); Zhang, Sheng, Langfang, Hebei, 065000 (CN)
(74) Representative: Isarpatent

(57) **Abstract**

Embodiments of the present invention disclose a method and apparatus for determining a parameter relationship of a control valve, a device, a system and a medium. The method comprises: determining an actual value of a mechanical structure parameter and an actual value of a controlled pressure difference parameter of a pressure independent control valve; inputting the actual value of the mechanical structure parameter and the actual value of the controlled pressure difference parameter into a calibration model, the calibration model being adapted to determine a correlation between a flow rate parameter and a pressure difference parameter of the pressure independent control valve on the basis of the mechanical structure parameter and the controlled pressure difference parameter; and receiving the correlation between the flow rate parameter and the pressure difference parameter from the calibration model. The correlation between the flow rate parameter and the pressure difference parameter of the pressure independent control valve is determined by using a variety of models such as an artificial intelligence model, so that the soft sensing and precise control of the flow rate can be achieved without installing a flow meter, thereby reducing equipment costs and installation expenses. Moreover, lightweight processing is performed on a flow model to facilitate on-site deployment and application.

## Description

### Technical Field

The present invention relates to the technical field of Artificial Intelligence (AI), and in particular to a method and apparatus for determining a parameter relationship of a control valve, a device, a system and a medium.

### Background Art

A Mechanical Pressure Independent Control Valve (MPICV) can achieve stable flow output within a range of pressure difference between two ends of the valve (for example, 30 KPa to 600 KPa), and has the advantages of large pressure difference adjustment range, fast response and accuracy. A pressure difference controller usually has a spring diaphragm structure.

It is important to obtain flow rate data from the MPICV. However, obtaining flow rate values through physical sensors such as flow meters has cost issues. For example, an ultrasonic flow meter is generally installed at the front end of the valve, straight pipe sections (for example, 5 to 10 times the pipe diameter) are required upstream and downstream of the flow meter, and large vibrations and interference sources such as high/low-voltage electric frequency converters should be avoided. In practice, in many cases, it is impossible to install a flow meter due to budget and space reasons, making it difficult to obtain flow rate data from the MPICV.

### Summary of the Invention

Embodiments of the present invention disclose a method and apparatus for determining a parameter relationship of a pressure independent control valve, a device, a system and a medium.

A method for determining a parameter relationship of a pressure independent control valve, comprising:
determining an actual value of a mechanical structure parameter and an actual value of a controlled pressure difference parameter of the pressure independent control valve;
inputting the actual value of the mechanical structure parameter and the actual value of the controlled pressure difference parameter into a calibration model, the calibration model being adapted to determine a correlation between a flow rate parameter and a pressure difference parameter of the pressure independent control valve on the basis of the mechanical structure parameter and the controlled pressure difference parameter; and
receiving the correlation between the flow rate parameter and the pressure difference parameter from the calibration model.

Therefore, the calibration model can be used to determine the correlation between the flow rate parameter and the pressure difference parameter of the pressure independent control valve, thereby facilitating the determination of the pressure difference parameter based on the flow rate parameter or the determination of the flow rate parameter based on the pressure difference parameter, which is suitable for a variety of application scenarios.

In an embodiment, the method comprises:
determining a current value of the pressure difference parameter when a current value of the mechanical structure parameter is equal to the actual value of the mechanical structure parameter; and
inputting the current value of the pressure difference parameter into the correlation to determine a current value of the flow rate parameter.

Therefore, when the current value of the mechanical structure parameter is equal to the actual value of the mechanical structure parameter, the current value of the pressure difference parameter can be directly input into the correlation to quickly obtain the current flow.

In an embodiment, the calibration model comprises at least one of the following:
a trained AI model adapted to predict the correlation on the basis of the mechanical structure parameter and the controlled pressure difference parameter; and
a mechanism model adapted to infer the correlation on the basis of the mechanical structure parameter and the controlled pressure difference parameter.

It can be seen that the calibration model can be implemented as an AI model or a mechanism model, which provides flexible application methods.

In an embodiment, the mechanical structure parameter comprises a preset opening parameter, a position parameter of an actuator and a position parameter of a pressure-balanced valve plug, the method comprises a training process of the AI model, and the training process comprises:
determining training samples comprising training data and a label, wherein the training data comprises a sample value of the preset opening parameter, a sample value of the position parameter of the actuator, a sample value of the position parameter of the pressure-balanced valve plug, and a sample value of the controlled pressure difference parameter, and the label comprises a labeled value of the flow rate parameter and a labeled value of the pressure difference parameter;
inputting the training samples into a neural network model;
receiving a predicted value of the flow rate parameter and a predicted value of the pressure difference parameter from the neural network model;
on the basis of the predicted value of the flow rate parameter, the predicted value of the pressure difference parameter, the labeled value of the flow rate parameter, and the labeled value of the pressure difference parameter, determining a loss function value of the neural network model; and
configuring model parameters of the neural network model so that the loss function value is lower than a preset threshold.

Therefore, by using the preset opening parameter, the position parameter of the actuator and the position parameter of the pressure-balanced valve plug as model inputs, and the flow rate parameter and the pressure difference parameter as model outputs, an AI model that predicts the correlation between the flow rate parameter and the pressure difference parameter can be trained.

In an embodiment, the method comprises:
on the basis of the sample value of the position parameter of the actuator, the sample value of the preset opening parameter, and the sample value of the position parameter of the pressure-balanced valve plug, determining a three-dimensional model for the pressure independent control valve; and
on the basis of the labeled value of the pressure difference parameter, performing a computational fluid dynamics simulation on the three-dimensional model to determine the labeled value of the flow rate parameter.

Therefore, on the basis of the simulation results, the labeled value of the flow rate parameter in the training samples can be quickly determined, reducing the workload of acquiring training samples.

In an embodiment, the method comprises:
on the basis of the computational fluid dynamics simulation, determining a first force of the pressure-balanced valve plug in a Z-axis direction and a second force of the pressure-balanced valve plug in an X-axis direction, wherein the Z-axis is a symmetry axis direction of the pressure-balanced valve plug, and the X-axis is a medium flow direction of the pressure independent control valve;
determining a resultant force of the first force and the second force; and
determining a sample value of the controlled pressure difference parameter on the basis of the resultant force and a pressure-bearing area of the pressure-balanced valve plug.

Therefore, on the basis of the simulation results, the sample value of the controlled pressure difference parameter in the training samples can be quickly determined, reducing the workload of acquiring training samples.

In an embodiment, the method comprises:
inputting the sample value of the controlled pressure difference parameter into a trained AI model adapted to correct the controlled pressure difference parameter;
receiving a corrected sample value of the controlled pressure difference parameter from the AI model; and
on the basis of the corrected sample value of the controlled pressure difference parameter, updating the sample value of the controlled pressure difference parameter.

It can be seen that the accuracy of the training data is improved by correcting the sample value of the controlled pressure difference parameter through the AI model.

In an embodiment, the method comprises:
changing the actual value of the mechanical structure parameter and the actual value of the controlled pressure difference parameter N times, where N is a positive integer of at least **1;**
inputting the actual value of the mechanical structure parameter and the actual value of the controlled pressure difference parameter after each change into the trained AI model;
receiving, from the AI model, N changed correlations between the flow rate parameter and the pressure difference parameter that are obtained by N predictions; and
on the basis of the N changed correlations and the correlation, fitting a polynomial expression with the flow rate parameter as a dependent variable, and the pressure difference parameter, the preset opening parameter and the position parameter of the actuator as dependent variables.

It can be seen that the use of a multivariable high-order polynomial fitting algorithm can generate a lightweight universal flow characteristic model of the valve, reducing the pressure of deployment.

In an embodiment, the method comprises:
extracting coefficients of the polynomial expression; and
generating a two-dimensional code comprising the coefficients.

It can be seen that transmitting the coefficients of the polynomial through the two-dimensional code improves convenience.

In an embodiment, the method comprises:
determining a current value of the pressure difference parameter, a current value of the preset opening parameter, and a current value of the position parameter of the actuator; and
inputting the current value of the pressure difference parameter, the current value of the preset opening parameter and the current value of the position parameter of the actuator into the polynomial expression to determine a current value of the flow rate parameter.

It can be seen that the current value of the flow rate parameter can be quickly determined by the polynomial, improving the processing speed.

In an embodiment, the method comprises:
scanning the two-dimensional code comprising the coefficients of the polynomial expression to obtain the coefficients; and
substituting the coefficients into a general formula of the polynomial expression to determine the polynomial expression.

Therefore, the polynomial expression can be determined quickly and conveniently through the two-dimensional code.

An apparatus for determining a parameter relationship of a pressure independent control valve, comprising:
a first determination module configured to determine an actual value of a mechanical structure parameter and an actual value of a controlled pressure difference parameter of the pressure independent control valve;
an input module configured to input the actual value of the mechanical structure parameter and the actual value of the controlled pressure difference parameter into a calibration model, the calibration model being adapted to determine a correlation between a flow rate parameter and a pressure difference parameter of the pressure independent control valve on the basis of the mechanical structure parameter and the controlled pressure difference parameter; and
a receiving module configured to receive the correlation between the flow rate parameter and the pressure difference parameter from the calibration model.

Therefore, the correlation between the flow rate parameter and the pressure difference parameter of the pressure independent control valve can be determined in a model manner, thereby facilitating the determination of the pressure difference parameter based on the flow rate parameter or the determination of the flow rate parameter based on the pressure difference parameter, which is suitable for a variety of application scenarios.

In an embodiment, the apparatus comprises:
a second determination module configured to: determine a current value of the pressure difference parameter when a current value of the mechanical structure parameter is equal to the actual value of the mechanical structure parameter; and input the current value of the pressure difference parameter into the correlation to determine a current value of the flow rate parameter.

Therefore, when the current value of the mechanical structure parameter is equal to the actual value of the mechanical structure parameter, the current value of the pressure difference parameter can be directly input into the correlation to quickly obtain the current flow.

The calibration model comprises at least one of the following:
a trained AI model adapted to predict the correlation on the basis of the mechanical structure parameter and the controlled pressure difference parameter; and
a mechanism model adapted to infer the correlation on the basis of the mechanical structure parameter and the controlled pressure difference parameter.

It can be seen that the calibration model can be implemented as an AI model or a mechanism model, which provides flexible application methods.

In an embodiment, the mechanical structure parameter comprises a preset opening parameter, a position parameter of an actuator and a position parameter of a pressure-balanced valve plug, and the apparatus comprises:
a training module configured to perform a training process of the artificial intelligence model, the training process comprising: determining training samples comprising training data and a label, wherein the training data comprises a sample value of the preset opening parameter, a sample value of the position parameter of the actuator, a sample value of the position parameter of the pressure-balanced valve plug, and a sample value of the controlled pressure difference parameter, and the label comprises a labeled value of the flow rate parameter and a labeled value of the pressure difference parameter; inputting the training samples into a neural network model; receiving a predicted value of the flow rate parameter and a predicted value of the pressure difference parameter from the neural network model; on the basis of the predicted value of the flow rate parameter, the predicted value of the pressure difference parameter, the labeled value of the flow rate parameter, and the labeled value of the pressure difference parameter, determining a loss function value of the neural network model; and configuring model parameters of the neural network model so that the loss function value is lower than a preset threshold.

Therefore, by using the preset opening parameter, the position parameter of the actuator and the position parameter of the pressure-balanced valve plug as model inputs, and the flow rate parameter and the pressure difference parameter as model outputs, an AI model that predicts the correlation between the flow rate parameter and the pressure difference parameter can be trained.

In an embodiment, the training module is configured to: on the basis of the sample value of the position parameter of the actuator, the sample value of the preset opening parameter, and the sample value of the position parameter of the pressure-balanced valve plug, determine a three-dimensional model for the pressure independent control valve; on the basis of the labeled value of the pressure difference parameter, perform a computational fluid dynamics simulation on the three-dimensional model to determine the labeled value of the flow rate parameter; on the basis of the computational fluid dynamics simulation, determine a first force of the pressure-balanced valve plug in a Z-axis direction and a second force of the pressure-balanced valve plug in an X-axis direction, wherein the Z-axis is a symmetry axis direction of the pressure-balanced valve plug, and the X-axis is a medium flow direction of the pressure independent control valve; determine a resultant force of the first force and the second force; and determine a sample value of the controlled pressure difference parameter on the basis of the resultant force and a pressure-bearing area of the pressure-balanced valve plug.

Therefore, on the basis of the simulation results, the training samples can be quickly determined, reducing the workload of acquiring training samples.

A control system for a pressure independent control valve, comprising:
a control subsystem configured to: determine an actual value of a mechanical structure parameter and an actual value of a controlled pressure difference parameter of the pressure independent control valve; input the actual value of the mechanical structure parameter and the actual value of the controlled pressure difference parameter into a calibration model, the calibration model being adapted to determine a correlation between a flow rate parameter and a pressure difference parameter of the pressure independent control valve on the basis of the mechanical structure parameter and the controlled pressure difference parameter; and receive the correlation between the flow rate parameter and the pressure difference parameter from the calibration model; and generate a control instruction for the pressure independent control valve on the basis of the correlation; and
an actuator configured to control the pressure independent control valve on the basis of the control instruction.

It can be seen that the pressure independent control valve can be accurately controlled on the basis of the correlation, improving the control efficiency.

The calibration model comprises at least one of the following:
a trained AI model adapted to predict the correlation on the basis of the mechanical structure parameter and the controlled pressure difference parameter; and
a mechanism model adapted to infer the correlation on the basis of the mechanical structure parameter and the controlled pressure difference parameter.

In an embodiment, the control subsystem comprises:
a control host configured to: determine an actual value of a mechanical structure parameter and an actual value of a controlled pressure difference parameter of the pressure independent control valve; input the actual value of the mechanical structure parameter and the actual value of the controlled pressure difference parameter into the trained AI model; receive a predicted correlation between the flow rate parameter and the pressure difference parameter from the AI model; change the actual value of the mechanical structure parameter and the actual value of the controlled pressure difference parameter N times, where N is a positive integer of at least 1; input the actual value of the mechanical structure parameter and the actual value of the controlled pressure difference parameter after each change into the trained AI model; receive, from the AI model, N changed correlations between the flow rate parameter and the pressure difference parameter that are obtained by N predictions; and on the basis of the N changed correlations and the correlation, fit a polynomial expression with the flow rate parameter as a dependent variable, and the pressure difference parameter, the preset opening parameter and the position parameter of the actuator as dependent variables; extract coefficients of the polynomial expression; and generate a two-dimensional code comprising the coefficients; and
a control device configured to: scan the two-dimensional code comprising the coefficients of the polynomial expression to obtain the coefficients; substitute the coefficients into a general formula of the polynomial expression to determine the polynomial expression; determine a current value of the pressure difference parameter, a current value of the preset opening parameter, and a current value of the position parameter of the actuator; and input the current value of the pressure difference parameter, the current value of the preset opening parameter and the current value of the position parameter of the actuator into the polynomial expression to determine a current value of the flow rate parameter; and generate a control instruction for controlling a flow rate of the pressure independent control valve on the basis of the current value of the flow rate parameter.

The use of a multivariable high-order polynomial fitting algorithm can generate a lightweight universal flow characteristic model of the valve, reducing the pressure of deployment. The current value of the flow rate parameter can be quickly determined by the polynomial, improving the processing speed. Moreover, transmitting the coefficients of the polynomial through the two-dimensional code improves convenience.

In an embodiment, the control device is configured to perform at least one of the following:
when the current value of the flow rate parameter is greater than a predetermined flow rate threshold value, generating a control instruction for reducing a flow rate of the pressure independent control valve;
when the current value of the flow rate parameter is less than the flow rate threshold value, generating a control instruction for increasing a flow rate of the pressure independent control valve; and
when the current value of the flow rate parameter is equal to the flow rate threshold value, generating a control instruction for maintaining a flow rate of the pressure independent control valve.

It can be seen that multiple flow-based control methods are realized.

An electronic device, comprising a processor and a memory;
wherein the memory stores an application program executable by the processor, which is used to cause the processor to perform the method for determining the parameter relationship of the pressure independent control valve as described in any one of the above items.

A computer-readable storage medium, having computer-readable instructions stored therein, wherein the computer-readable instructions are used to perform the method for determining the parameter relationship of the pressure independent control valve as described in any one of the above items.

A computer program product, comprising a computer program, wherein when the computer program is executed by a processor, the method for determining the parameter relationship of the pressure independent control valve as described in any one of the above items is implemented.

### Brief Description of the Drawings

Preferred embodiments of the present invention will be described in detail below with reference to the accompanying drawings, so that the above and other features and advantages of the present invention will be more apparent to those of ordinary skill in the art. In the accompanying drawings:
Fig. 1 is an exemplary flowchart of a method for determining a parameter relationship of a pressure independent control valve according to an embodiment of the present invention.
Fig. 2 is a schematic diagram of a trained AI model for predicting a correlation between a flow rate parameter and a pressure difference parameter according to an embodiment of the present invention.
Fig. 3 is a schematic diagram of determining a flow rate of a pressure independent control valve using a trained AI model according to an embodiment of the present invention.
Fig. 4 is an exemplary process diagram for determining a flow rate of a pressure independent control valve according to an embodiment of the present invention.
Fig. 5 is a graph of a correlation between a flow rate parameter and a pressure difference parameter according to an embodiment of the present invention.
Fig. 6 is an exemplary structural diagram of a pressure independent control valve according to an embodiment of the present invention.
Fig. 7 is a structural diagram of a control system for a pressure independent control valve according to an embodiment of the present invention.
Fig. 8 is a structural diagram of an apparatus for determining a parameter relationship of a pressure independent control valve according to an embodiment of the present invention.
Fig. 9 is a structural diagram of an electronic device according to an embodiment of the present invention.

In the figures, reference numerals are as follows:

| Reference numeral | Meaning |
|---|---|
| 100 to 103 | Step |
| 10 | Training sample |
| 11 | Training Data |
| 12 | Label |
| 20 | Neural network model |
| 21 | Predicted value |
| 22 | Loss function value |
| 30 | Trained AI model |
| 31 | Set of actual values |
| 32 | Relationship curve |
| 33 | Real-time pressure difference |
| 34 | Real-time flow rate |
| 40 | Generation process of training data set |
| 41 | Position parameter of pressure-balanced valve plug |
| 42 | Preset opening parameter |
| 43 | Position parameter of actuator |
| 44 | Controlled pressure difference parameter |
| 45 | Flow parameter |
| 46 | Differential pressure parameter |
| 47 | Training process |
| 48 | TensorFlow |
| 49 | Python |
| 50 | Data acquisition process |
| 51 | Set of actual values |
| 52 | Determination process of correlation |
| 53 | Correlation |
| 54 | Valve control device |
| 55 | Measurement device |
| 60 to 61 | Curve representing correlation |
| 62 | Flow control valve plug |
| 63 | Pressure-balanced valve plug |
| 90 | Control subsystem |
| 91 | Actuator |
| 92 | Control host |
| 93 | Control device |
| 94 | Two-dimensional code |
| 95 | **Pressure independent control valve** |
| 700 | Apparatus determining parameter relationship of pressure independent control valve |
| 701 | First determination module |
| 702 | Input module |
| 703 | Receiving module |
| 704 | Second determination module |
| 705 | Training module |
| 600 | Electronic device |
| 601 | Memory |
| 602 | Processor |

### Detailed Description of the Embodiments

In order to make the objectives, technical solutions and advantages of the present invention more apparent, the present invention will be further described in detail below with reference to the embodiments.

For the sake of brevity and intuitiveness in description, the solutions of the present invention will be expounded below by describing several representative embodiments. A large number of details in the embodiments are only used to help understand the solutions of the present invention. However, it is obvious that the technical solutions of the present invention may not be limited to these details when implemented. In order to avoid unnecessarily obscuring the solutions of the present invention, some embodiments are not described in detail, but only a framework is given. Hereinafter, "including" means "including but not limited to", and "according to..." means "at least according to..., but not limited to only according to...". Due to the language habits of Chinese, when a quantity of a component is not specifically specified below, it means that the quantity of the component may be one or more, or may be understood as at least one.

In various applications, it is important to determine the flow rate data (e.g., real-time flow rate data) of a control valve. However, it is expensive to obtain flow rate values through physical sensors such as flow meters. For example, an expensive ultrasonic flow meter is generally installed at the front end of a valve, straight pipe sections 5 to 10 times the pipe diameter are required upstream and downstream of the flow meter, and large vibrations and interference sources such as high-low-voltage electric frequency converters should be avoided. In practice, in many engineering applications, it is impossible to install a flow meter due to budget and space reasons, making it difficult to conveniently obtain the flow rate data of the control valve.

Soft sensing is a virtual sensor technology based on computer models and algorithms. It uses information from other sensors to perform computation and predictions instead of direct measurements, which can solve problems such as cost, installability and measurability encountered in industry. How to use soft sensing technology to obtain flow rate data of control valves (for example, control valves in Heating, Ventilation and Air Conditioning (HVAC) systems) is an unresolved technical problem. A pressure difference controller of a mechanical pressure independent control valve usually has a spring diaphragm structure. For example, the output force accuracy of the spring is about 8%, and in addition to the tolerances and assembly errors of parts and components, the nominal flow accuracy of the valve is about 10%. If the flow characteristics of each valve are estimated by measuring physical quantities such as dimensional tolerances, the flow rate value can be obtained.

In an embodiment of the present invention, a soft sensing implementation solution for realizing a mechanical pressure independent control valve is proposed in combination with model technology. For example, a neural network model can be trained using fluid simulation results, measured mechanical structure data, and fluid test results. By quickly measuring the mechanical structure data before the valve leaves the factory, a flow model for the valve can be predicted by a trained AI model. Moreover, lightweight processing can be performed on the flow model. For example, a two-dimensional code is generated on the basis of the flow model. Subsequently, an on-site valve control device only needs to scan the two-dimensional code, so that a flow model for a single valve body can be quickly configured into a valve actuator to perform flow rate control.

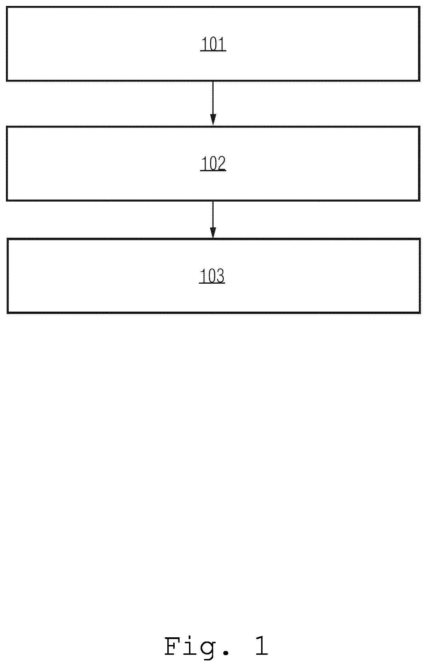

Fig. 1 is an exemplary flowchart of a method for determining a parameter relationship of a pressure independent control valve according to an embodiment of the present invention. As shown in Fig. 1, the method includes the following steps:
Step 101: An actual value of a mechanical structure parameter and an actual value of a controlled pressure difference parameter of the pressure independent control valve are determined.

For example, the mechanical structure parameter may include:
(1) a position parameter (RV stroke) of an actuator of the valve;
(2) a preset opening parameter (Preset angle) of the valve; and
(3) a position parameter (DPR) of a pressure-balanced valve plug of the valve.

Specifically, RV stroke corresponds to the position of a flow regulating valve plug, which is the size that the actuator can drive, and represents the position of the flow regulating valve plug and the fluid passage area; Preset angle is similar to RV stroke in function, wherein Preset angle is a manual preset function and may also represent the fluid passage area; and DPR is the position of the pressure-balanced valve plug of the valve, which represents the position of a pressure difference controller.

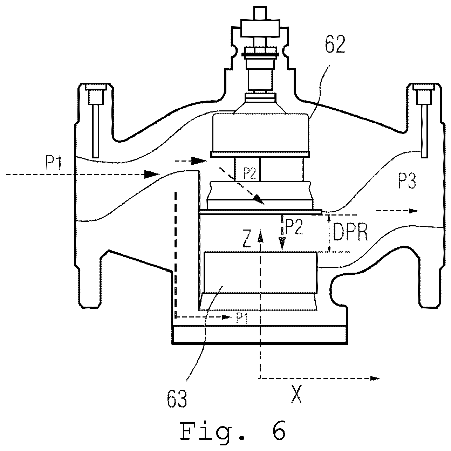

Fig. 6 is an exemplary structural diagram of a pressure independent control valve according to an embodiment of the present invention. In Fig. 6, the valve includes a flow regulating valve plug 62 and a pressure-balanced valve plug 63. Fluid P1 enters the valve from an inlet, and fluid P3 flows out of the valve from an outlet. A part of fluid P2 in fluid P1 is applied to the pressure-balanced valve plug 63. A controlled pressure difference parameter (DP12) is the pressure difference between upper and lower chambers of the pressure-balanced valve plug 63, that is, the pressure difference (P1-P2) between P1 and P2 shown in **Fig. 6****. A** pressure difference parameter (DP13) is the pressure difference (P1-P3) between the inlet and outlet of the valve.

The actual value of the mechanical structure parameter and the actual value of the controlled pressure difference parameter may be obtained through on-site detection of the pressure independent control valve. For example, the actual value of RV stroke is measured by a displacement sensor; the actual value of Preset angle is measured by an angle encoder; and the actual value of DPR and the actual value of DP12 are measured by an optical vision system.

Step 102: The actual value of the mechanical structure parameter and the actual value of the controlled pressure difference parameter are input into a calibration model, wherein the calibration model is adapted to determine a correlation between the flow rate parameter and the pressure difference parameter of the pressure independent control valve on the basis of the mechanical structure parameter and the controlled pressure difference parameter.

This correlation represents a correlation between the flow rate parameter and the pressure difference parameter in a specific structure (when the mechanical structure parameter has the actual value) .

In an embodiment, the calibration model includes at least one of the following:
(1) a trained AI model adapted to predict the correlation on the basis of the mechanical structure parameter and the controlled pressure difference parameter; and
(2) a mechanism model adapted to infer the correlation on the basis of the mechanical structure parameter and the controlled pressure difference parameter.

It can be seen that the calibration model may be implemented as an AI model or a mechanism model, which provides flexible application methods.

Step 103: The correlation between the flow rate parameter and the pressure difference parameter is received from the calibration model.

For example, when the calibration model is implemented as a trained AI model, step 103 includes: receiving a predicted correlation between the flow rate parameter and the pressure difference parameter from the trained AI model.

In an embodiment, the method includes: determining a current value of the pressure difference parameter when a current value of the mechanical structure parameter is equal to the actual value of the mechanical structure parameter; and inputting the current value of the pressure difference parameter into the correlation to determine a current value of the flow rate parameter.

Therefore, when the current value of the mechanical structure parameter is equal to the actual value of the mechanical structure parameter, the current value of the pressure difference parameter obtained at this time is input into the correlation determined in step 103, so that the current value of the flow rate parameter can be determined.

In an embodiment, the mechanical structure parameter includes Preset angle, RV stroke and DPR, and the method of Fig. 1 further includes a training process of the AI model. The training process includes:
(1) determining training samples including training data and a label, wherein the training data includes a sample value of Preset angle, a sample value of RV stroke, a sample value of DPR, and a sample value of DP12, and the label includes a labeled value of the flow rate parameter (QV) and a labeled value of the pressure difference parameter (DP13);
(2) inputting the training samples into a neural network model; receiving a predicted value of QV and a predicted value of DP13 from the neural network model;
(3) determining a loss function value of the neural network model on the basis of the predicted value of QV, the predicted value of DP13, the labeled value of QV, and the labeled value of DP13; and
(4) configuring model parameters of the neural network model so that the loss function value is lower than a preset threshold.

For example, the loss function value of the neural network model is determined on the basis of the difference between the first correlation between the labeled value of DP13 and the labeled value of QV and the second correlation between the predicted value of DP13 and the predicted value of QV. For another example, the loss function value of the neural network model is determined jointly by combining the first difference between the labeled value of DP13 and the predicted value of DP13 and the second difference between the labeled value of QV and the predicted value of QV.

After determining the loss function value, the model parameters of the neural network model are configured on the basis of a back propagation algorithm so that the loss function value is lower than the preset threshold.

The specific embodiment for determining the loss function value has been described above. Those skilled in the art will appreciate that this description is merely exemplary and is not intended to limit the scope of protection of the embodiments of the present invention.

Therefore, by using Preset angle, RV stroke, DPR and DP12 as model inputs, and DP13 and QV as model outputs, the embodiments of the present invention can train an AI model adapted to predict the correlation between QV and DP13 of the pressure independent control valve on the basis of the mechanical structure parameter (including Preset angle, RV stroke and DPR) and DP12.

The process of how to conveniently obtain a training data set for the neural network model will be described below in combination with computational fluid dynamics (CFD) simulation.

In an embodiment, the method includes: determining a three-dimensional model for the pressure independent control valve on the basis of the sample value of RV stroke, the sample value of Preset angle, and the sample value of DPR; and performing CFD simulation on the three-dimensional model on the basis of the labeled value of DP13 to determine a labeled value of QV.

Therefore, after determining the three-dimensional model for the pressure independent control valve through the sample value of RV stroke, the sample value of Preset angle, and the sample value of DPR, the labeled value of QV can be obtained by performing CFD simulation on the three-dimensional model. It can be seen that the labeled value of QV is determined on the basis of the CFD simulation results, and the simulation results are introduced into the training data as a label, thereby reducing the labeling work of the training data.

In an embodiment, the method includes: determining a first force of the pressure-balanced valve plug in a Z-axis direction and a second force in an X-axis direction on the basis of CFD simulation, wherein the Z-axis is a symmetry axis direction of the pressure-balanced valve plug and the X-axis is a medium flow direction of the pressure independent control valve; determining the resultant force of the first force and the second force; and determining a sample value of DP12 on the basis of the resultant force and the pressure-bearing area of the pressure-balanced valve plug. Therefore, the sample value of DP12 can be obtained through CFD simulation.

It can be seen that the sample value of DP12 is determined on the basis of the CFD simulation results, and the simulation results are introduced into the training data as training data, thereby reducing the workload.

An example of determining a complete data set including a training data set, a validation data set, and a test data set will be described below.

First of all, for pressure independent control valves with the same model, a sample value of RV, a sample value of Preset and a sample value of DPR are obtained to determine a combination of RV stroke, Preset angle and DPR. At this time, a three-dimensional model for pressure independent valves with this model corresponding to the combination can be obtained.

Then, CFD simulation is performed through the three-dimensional model. The simulation process includes: inputting a DP13 state (i.e., a labeled value of DP13), so that a pressure distribution, i.e., a labeled value of the flow QV, can be obtained. The force of the pressure-balanced valve plug in the Z-axis and the force in the X-axis are extracted, wherein the force in the X-axis is used to calculate a friction force (the force in the X-direction multiplied by the friction coefficient is the friction force) . The resultant force of the X-axis force and the Z-axis force is divided by the pressure-bearing area of the pressure-balanced valve plug to calculate equivalent DP12 (i.e., a sample value of DP12). Similarly, the combination is maintained unchanged and multiple DP13s are input to obtain multiple QVs and multiple equivalent DP12s accordingly. That is to say, multiple data pairs can be obtained on the basis of a fixed combination of RV stroke, Preset, and DPR, wherein each data pair includes a sample value of QV and a sample value of DP12.

Next, different combinations of RV stroke, Preset angle and DPR are given, and the above process is repeated to obtain a complete data set including a large volume of data. The complete data set includes: RV, Preset angle, DPR, DP12, QV and DP13, wherein RV stroke, Preset angle, DPR and DP12 may be used as model inputs, and QV and DP13 may be used as model outputs.

In an embodiment, the complete data set may be split into a training data set, a verification data set, and a test data set in accordance with a predetermined ratio. For example, the data volume of the training data set may include 70% of the complete data set; the data volume of the verification data set may include 20% of the complete data set; and the data volume of the test data set may include 10% of the complete data set. It should be noted that the above division ratio in accordance with the data volume is only exemplary and is not intended to limit the protection scope of the embodiments of the present invention. Finally, the training data set may be used to train an artificial neural network. The verification data set is used to verify the trained artificial neural network. The test data set is used to test the verified artificial neural network.

Table 1 is an exemplary schematic table of the values of data in the complete data set.

**Table 1**

| Preset angle | DPR (mm) | RV stroke (mm) | DP13 (kpa) | DP12 (kpa) | Qv (m³/h) |
|---|---|---|---|---|---|
| 0.6 | 0.198 | 19 | 78.74149 | 4.382701 | 1.594249 |
| 0.6 | 0.198 | 19 | 94.60282 | 5.233934 | 1.742206 |
| 0.6 | 0.198 | 19 | 118.4431 | 6.493367 | 1.94053 |
| 0.6 | 0.198 | 19 | 134.8656 | 7.446854 | 2.078125 |
| 0.6 | 0.198 | 19 | 161.4731 | 8.857955 | 2.266481 |
| 0.6 | 0.198 | 19 | 189.0858 | 10.36826 | 2.4521 |
| 0.6 | 0.198 | 19 | 217.4703 | 11.88363 | 2.625185 |
| 0.6 | 0.198 | 19 | 242.9984 | 13.32996 | 2.780352 |
| 0.6 | 0.198 | 19 | 271.0155 | 14.82728 | 2.932351 |
| 0.6 | 0.198 | 19 | 314.3481 | 17.16807 | 3.155339 |
| 0.6 | 0.198 | 19 | 348.1962 | 19.09169 | 3.327419 |
| 0.6 | 0.198 | 19 | 389.2775 | 21.24671 | 3.510194 |
| 0.6 | 0.198 | 19 | 429.0381 | 23.33025 | 3.678282 |
| 0.6 | 0.198 | 19 | 470.7495 | 25.62085 | 3.854624 |
| 0.6 | 0.198 | 19 | 516.5481 | 28.07146 | 4.034761 |
| 0.6 | 0.198 | 19 | 562.2008 | 30.47381 | 4.203864 |
| 0.6 | 0.198 | 19 | 605.152 | 32.90054 | 4.368042 |
| 0.6 | 0.198 | 19 | 670.5107 | 36.20578 | 4.582202 |
| 0.6 | 0.198 | 19 | 717.7402 | 38.83212 | 4.745488 |
| 3 | 0.827 | 20 | 101.5918 | 3.12062 | 6.599254 |
| 3 | 0.827 | 20 | 121.1675 | 3.690504 | 7.176575 |
| 3 | 0.827 | 20 | 143.7428 | 4.347865 | 7.78955 |
| 3 | 0.827 | 20 | 166.657 | 5.016304 | 8.366933 |
| 3 | 0.827 | 20 | 192.8636 | 5.778548 | 8.980153 |
| 3 | 0.827 | 20 | 219.3393 | 6.545336 | 9.557413 |
| 3 | 0.827 | 20 | 247.5456 | 7.359938 | 10.13471 |
| 3 | 0.827 | 20 | 279.2254 | 8.277699 | 10.74804 |
| 3 | 0.827 | 20 | 310.6256 | 9.190285 | 11.32502 |
| 3 | 0.827 | 20 | 345.6285 | 10.21249 | 11.93824 |
| 3 | 0.827 | 20 | 380.1259 | 11.22378 | 12.51537 |
| 3 | 0.827 | 20 | 416.1769 | 12.28269 | 13.09246 |
| 3 | 0.827 | 20 | 456.2185 | 13.46045 | 13.70579 |
| 3 | 0.827 | 20 | 495.3939 | 14.61768 | 14.28281 |
| 3 | 0.827 | 20 | 538.6257 | 15.89945 | 14.89586 |
| 3 | 0.827 | 20 | 580.9454 | 17.15537 | 15.47299 |
| 3 | 0.827 | 20 | 625.0696 | 18.45838 | 16.04986 |
| 3 | 0.827 | 20 | 673.7737 | 19.89578 | 16.66306 |

In the table, Preset angle is dimensionless data; the units of RV stroke and DPR are both millimeters (mm); the units of DP12 and DP13 are both kilopascals (kpa); the unit of Qv is cubic meters per hour (m³/h).

In Table 1: for a first combination of RV stroke, Preset angle and DPR (that is, RV stroke = 0.6, Preset angle = 0.198, and DPR = 19), DP13, DP12 and Qv have multiple data pairs. Similarly, for a second combination of RV stroke, Preset angle and DPR (that is, RV stroke = 3, Preset angle = 0.827, and DPR = 20), DP13, DP12 and Qv also have multiple data pairs.

Typical examples of the values of the data in the complete data set are shown in Table 1 in an exemplary manner. In practice, the data in Table 1 may be further increased, such as adding other combinations of different values of RV stroke, Preset angle and DPR, adding data pairs in the first combination or adding data pairs in the second combination, etc. Moreover, when the complete data set is split into a training data set, a validation data set and a test data set, data may be randomly extracted from the complete data set to form the training data set, the validation data set and the test data set, or data may be extracted from the complete data set on the basis of a predetermined extraction rule (for example, on the basis of the temporal order of data generation) to form the training data set, the validation data set and the test data set.

In an embodiment, the method includes: inputting the sample value of DP12 into a trained AI model adapted to correct DP12; receiving the corrected sample value of DP12 from the AI model adapted to correct DP12; and updating the sample value of DP12 on the basis of the corrected sample value of DP12.

Therefore, the sample value of DP12 can be corrected by the AI model for correcting DP12, thereby improving the accuracy of the training data.

Preferably, the method includes a training process of the AI model for correcting DP12. The training process includes: determining a measured value of the DP12 parameter as a label on the basis of a real fluid test; inputting the measured value of the DP12 parameter and the sample value of DP12 into a neural network model; receiving the corrected value of the DP12 parameter from the neural network model; on the basis of the difference between the corrected value of the DP12 parameter and the measured value of the DP12 parameter, determining a loss function value; and configuring model parameters of the neural network model so that the loss function value is lower than a preset threshold.

It can be seen that the measured value of DP12 obtained on the basis of an actual system test can be used to train an AI model specifically for calibrating the sample value of DP12, thereby improving the accuracy of the training data.

Considering the inconvenience of deploying AI models on the sites of control valves (the computing power on the on-site side is usually limited), in the embodiments of the present invention, the flow characteristics of the valves at different openings under different pressures are tested through experiments, and a multivariable high-order polynomial fitting algorithm is used to generate a lightweight universal flow characteristic model. The universal flow characteristic model can be used as a universal model for valves, and can be corrected through on-site test data and fast calibration training, and a differentiated flow characteristic model for individual valves can be generated on the basis of the universal model. The differentiated flow characteristic model can describe the real-time and accurate differentiated flow resistance characteristics of individual valves in the HVAC system under different working conditions during the life cycle. In addition, on the basis of the differentiated flow characteristic model, the pressure and target flow under the real-time working conditions of the valve are used as inputs, and the valve stroke opening can be calculated by reverse rooting to control the movement of the actuator, so as to achieve the accurate flow rate control of the valve. The valve stroke displacement can be calculated by reverse rooting of the differentiated flow characteristic model, and the displacement value is used as the output of an actuator control module to control the valve stroke opening, thereby performing real-time flow rate control of the valve. The differentiated flow characteristic model may be integrated into the two-dimensional code, so that the two-dimensional code is scanned to download the model and perform parameter configuration. The differentiated flow characteristic model may also be independently run on a personal PC, integrated into an embedded real-time controller, or embedded into an edge device or cloud, and monitored and controlled through a front-end human-machine interface (HMI) . Before performing model regression fitting, the measured flow rate data at the above-mentioned different preset openings, stroke openings and pressures may be preprocessed, and the preprocessed data set is used as a training set serving as the input and output of the training model. This includes operations such as processing missing values, processing outliers, and data normalization or standardization.

In an embodiment, the method includes: changing the actual value of the mechanical structure parameter and the actual value of the controlled pressure difference parameter N times, where N is a positive integer of at least 1; inputting the actual value of the mechanical structure parameter and the actual value of the controlled pressure difference parameter after each change into a trained AI model; receiving, from the AI model, N changed correlations between the flow rate parameter and the pressure difference parameter obtained by N predictions; and on the basis of the N changed correlations and the correlation, fitting a polynomial expression with the flow rate parameter as a dependent variable, and the pressure difference parameter, the preset opening parameter and the position parameter of the actuator as dependent variables.

For example, for an individual pressure independent control valve with a specific model, the following steps are performed when it leaves the factory:
First of all, the actual value of the mechanical structure parameter (including a combination of the actual value of RV stroke, the actual value of Preset angle and the actual value of DPR, which can be obtained through an optical measurement system or various types of sensors) and the actual value of the DP12 parameter (for example, obtained by measuring the pressure gauge through an optical measurement system) of the control valve are determined; the actual value of the mechanical structure parameters and the actual value of the controlled pressure difference parameter are input into the trained AI model; and the correlation between QV and DP13, which is referred to as a first correlation, is received from the AI model.

Then, N changes are performed to obtain N correlations (correlations between QV and DP13) . Each change process includes:
(1) changing the mechanical structure parameter of the control valve (for example, changing at least one of RV stroke, Preset angle, and DPR), and determining the actual value of the changed mechanical structure parameter and the actual value of the DP12 parameter (the actual measured value of the DP12 parameter in the changed combination);
(2) inputting the actual value of the changed mechanical structure parameter and the actual value of the changed controlled pressure difference parameter into the trained AI model; and
(3) receiving, from the AI model, the correlation between QV and DP13, that is, the correlation obtained by this change.

Next, for the N changed correlations and the first correlation (i.e., the correlation determined before change), a polynomial expression is fitted with QV as a dependent variable, DP13, Preset Angle, and RV stroke as independent variables. For example, the polynomial expression may be implemented as a third-order polynomial.

For example, taking a third-order polynomial as an example, the fitted polynomial may be:
QV=a₁X₁³+ a₂X₂³+ a₃X₃³+ a₄X₁²+ a₅X₂²+ a₆X₃²+ a₇X₁+ a₈X₂+ a₉X3+ a₁₀. In the polynomial, X₁ is DP13; X₂ is Preset Angle; X₃ is RV stroke. a₁, a₂, a₃, a₄, a₅, a₆, a₇, a₈, a₉ and a₁₀ are coefficients. Each of a₁ to a₁₀ may obtain a specific value.

The above is described by taking the third-order polynomial as an example. In practice, the order of the polynomial may be changed, such as fourth-order, fifth-order, sixth-order or the like. Preferably, a sixth-order polynomial may be used.

In an embodiment, the method includes: extracting coefficients of the polynomial expression; and generating a two-dimensional code including the coefficients. For example, the two-dimensional code may be attached to the valve, thereby facilitating the subsequent precise flow rate control of the valve by scanning the two-dimensional code on site. It can be seen that a lightweight model may be integrated into the two-dimensional code, the two-dimensional code is scanned through a mobile phone APP to download the model and configure information of the valve, and the data can be transmitted to the actuator control module through on-site communication. It is also possible to evaluate the performance of the model by acquiring flow rate data under the current working conditions and calculation results of a default general model in real time, and perform refitting and training of the model according to the evaluation results to complete one-click calibration and flow model correction in the on-site environment.

In an embodiment, the method includes: scanning the two-dimensional code including coefficients of the polynomial expression to obtain the coefficients; and substituting the coefficients into a general formula of the polynomial expression to determine the polynomial expression.

In an embodiment, the method includes: determining a current value of DP13, a current value of Preset angle and a current value of RV; inputting the current value of DP13, the current value of Preset angle and the current value of RV into the polynomial expression to determine a current value of the flow rate parameter.

For example, at the on-site side of the valve, a valve control device (such as a mobile phone) may scan the two-dimensional code attached to the valve to obtain the specific values of the coefficients a₁ to a₁₀. Moreover, the valve control device stores the general formula of the third-order polynomial. For example, QV=a₁X₁³+ a₂X₂³+ a₃X₃³+ a₄X₁²+ a₅X₂²+ a₆X₃²+ a₇X₁+ a₈X₂+ a₉X3+ a₁₀. In the polynomial, X₁ is DP13; X₂ is Preset Angle; X₃ is RV stroke. By assigning the specific values of the coefficients a₁ to a₁₀ to the general formula, the calculation formula for calculating QV on the basis of DP13, Preset Angle and RV stroke can be obtained.

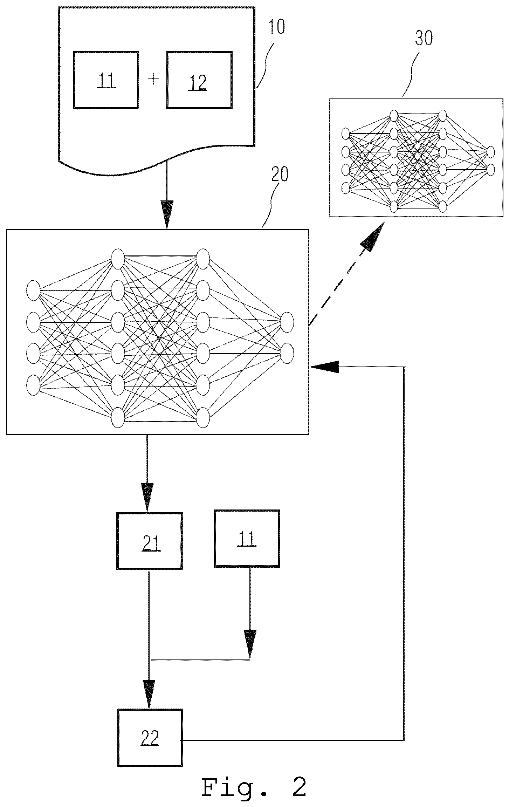

The embodiments of the present invention will be further described below with reference to the accompanying drawings. Fig. 2 is a schematic diagram of a trained AI model for predicting a correlation between a flow rate parameter and a pressure difference parameter according to an embodiment of the present invention.

In Fig. 2, a training sample 10 includes training data 11 (including Preset angle, RV, DPR, and DP12) and a label 12 (including QV and DP13) . The training sample 10 is input into a neural network model 20 to obtain a predicted value 21 of the relationship between QV and DP13. By comparing the predicted value with the label 12 to determine the difference therebetween, a loss function value 22 is obtained. Using the loss function value 22, back propagation is performed on the neural network model 20 to update the model parameters to obtain a trained AI model 30. On the basis of the AI model 30, a correlation curve between the flow rate parameter and the pressure difference parameter can be output.

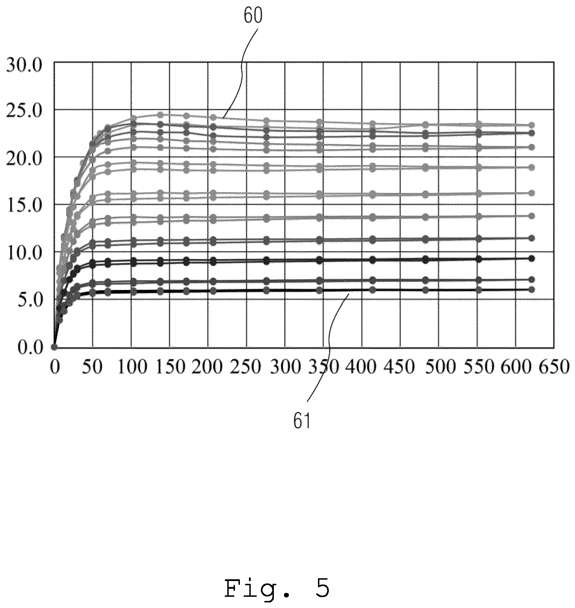

Fig. 5 is a graph of a correlation between QV and DP13 according to an embodiment of the present invention. In Fig. 5, a plurality of correlation curves are shown, wherein the horizontal axis is DP13 and the vertical axis is QV. For example, curve 60 corresponds to a correlation curve when Preset angle is 4, and curve 61 corresponds to a correlation curve when Preset angle is 0.5.

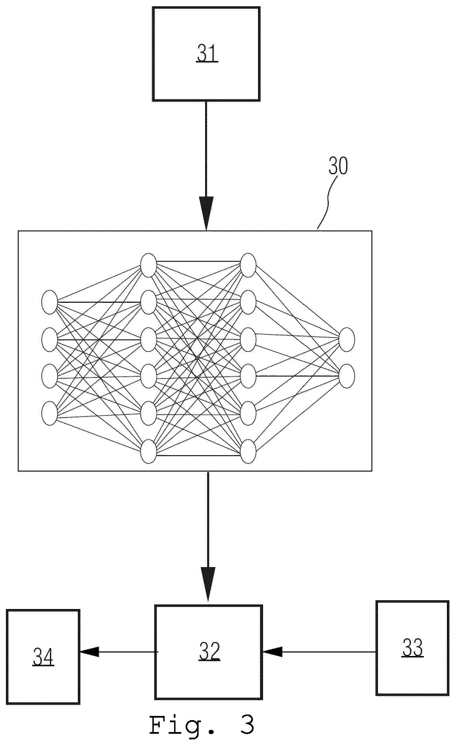

Fig. 3 is a schematic diagram of determining a flow rate of a pressure independent control valve using a trained AI model according to an embodiment of the present invention.

In Fig. 3, an actual value set 31 is measured, and the actual value set 31 includes an actual value of Preset angle, an actual value of RV, an actual value of DPR, and an actual value of DP12. The actual value set 31 is input into the trained AI model 30 to obtain a relationship curve 32 between DP13 and QV corresponding to the actual values. Then, a real-time pressure difference 33 is input into the relationship curve 32 to obtain a real-time flow rate 34.

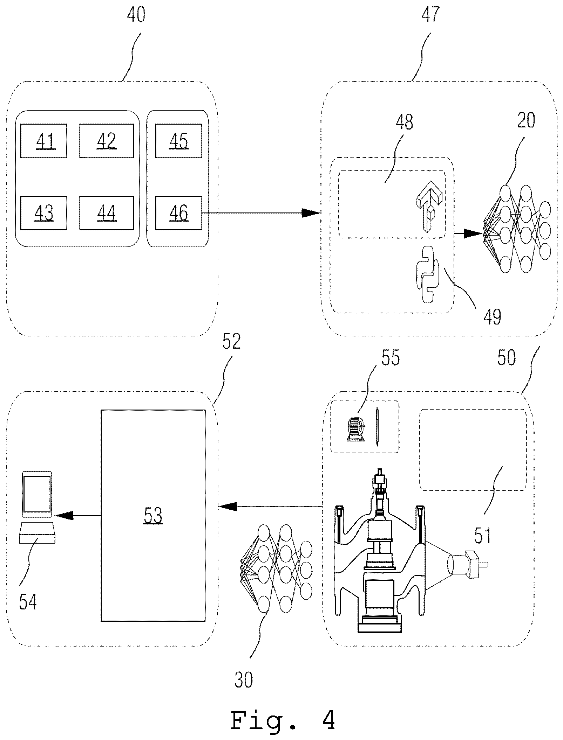

Fig. 4 is an exemplary process diagram for determining a flow rate of a pressure independent control valve according to an embodiment of the present invention.

First of all, a process 40 for generating a training data set is performed. The training data set includes: a position parameter 41 of a pressure-balanced valve plug, a preset opening parameter 42, a position parameter 43 of an actuator, and a controlled pressure difference parameter 42; and a flow rate parameter 45 and a pressure difference parameter 46 which serve as a label. Preferably, the training data set is generated on the basis of CFD simulation results.

Then, a training process 47 is performed. TensorFlow 48 performs data preprocessing on the training data set. On the basis of Python 49, training samples in the training data set are input into a neural network model 20 to perform training on the neural network model 20 to obtain a trained AI model 30.

Then, a data acquisition process 50 is performed. In the data acquisition process 50, an actual value set 51 is obtained. The actual value set 51 includes: an actual value 51 of a position parameter 41 of a pressure-balanced valve plug, an actual value 51 of a preset opening parameter 42, an actual value 51 of a position parameter 43 of an actuator, and an actual value of a controlled pressure difference parameter, which are obtained by using a measuring device 55. For example, the measuring device 55 may include an optical measurement system or a physical sensor.

Next, a correlation determination process 52 is performed. In the correlation determination process 52, the actual value set 51 is input into the trained AI model 30 to obtain a correlation 53 between the flow rate parameter and the pressure difference parameter. Then, the correlation 53 may be used to configure a valve control device 54.

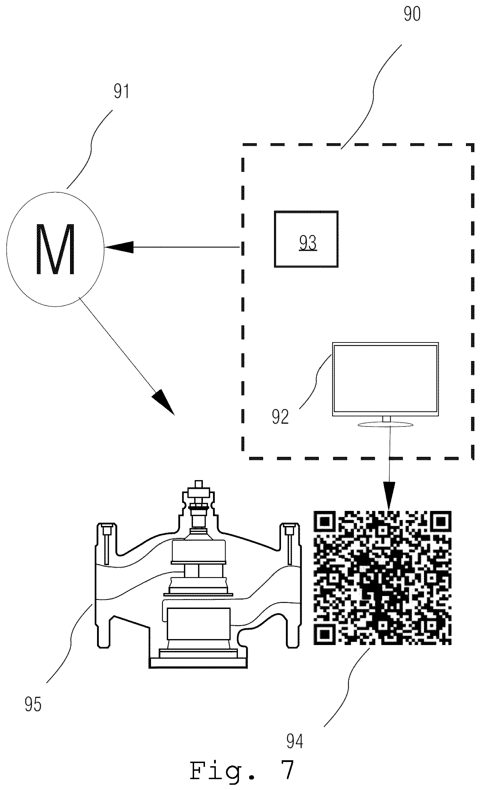

Fig. 7 is a structural diagram of a control system for a pressure independent control valve according to an embodiment of the present invention. As shown in Fig. 7, the control system includes:
a control subsystem 90 configured to: determine an actual value of a mechanical structure parameter and an actual value of a controlled pressure difference parameter of the pressure independent control valve 95; input the actual value of the mechanical structure parameter and the actual value of the controlled pressure difference parameter into a calibration model, the calibration model being adapted to determine a correlation between a flow rate parameter and a pressure difference parameter of the pressure independent control valve 95 on the basis of the mechanical structure parameter and the controlled pressure difference parameter; receive the correlation between the flow rate parameter and the pressure difference parameter from the calibration model; and generate a control instruction for the pressure independent control valve 95 on the basis of the correlation; and an actuator 91 configured to control the pressure independent control valve 95 on the basis of the control instruction.

In an embodiment, the calibration model includes at least one of the following: a trained AI model adapted to predict the correlation on the basis of the mechanical structure parameter and the controlled pressure difference parameter; and a mechanism model adapted to infer the correlation on the basis of the mechanical structure parameter and the controlled pressure difference parameter.

In an embodiment, the control subsystem 90 includes: a control host 92 configured to: determine an actual value of a mechanical structure parameter and an actual value of a controlled pressure difference parameter of the pressure independent control valve 95; input the actual value of the mechanical structure parameter and the actual value of the controlled pressure difference parameter into the trained AI model; receive a predicted correlation between the flow rate parameter and the pressure difference parameter from the AI model; change the actual value of the mechanical structure parameter and the actual value of the controlled pressure difference parameter N times, where N is a positive integer of at least 1; input the actual value of the mechanical structure parameter and the actual value of the controlled pressure difference parameter after each change into the trained AI model; receive, from the artificial intelligence model, N changed correlations between the flow rate parameter and the pressure difference parameter that are obtained by N predictions; and on the basis of the N changed correlations and the correlation, fit a polynomial expression with the flow rate parameter as a dependent variable, and the pressure difference parameter, the preset opening parameter and the position parameter of the actuator as dependent variables; extract coefficients of the polynomial expression; and generate a two-dimensional code 94 including the coefficients; and a control device 93 configured to: scan the two-dimensional code 94 to obtain the coefficients; substitute the coefficients into a general formula of the polynomial expression to determine the polynomial expression; determine a current value of the pressure difference parameter, a current value of the preset opening parameter, and a current value of the position parameter of the actuator; and input the current value of the pressure difference parameter, the current value of the preset opening parameter and the current value of the position parameter of the actuator into the polynomial expression to determine a current value of the flow rate parameter; and generate a control instruction for controlling a flow rate of the pressure independent control valve 95 on the basis of the current value of the flow rate parameter.

In an embodiment, the control device 93 is configured to perform at least one of the following:
(1) when the current value of the flow rate parameter is greater than a predetermined flow rate threshold value, generating a control instruction for reducing a flow rate of the pressure independent control valve;
(2) when the current value of the flow rate parameter is less than the flow rate threshold value, generating a control instruction for increasing a flow rate of the pressure independent control valve; and
(3) when the current value of the flow rate parameter is equal to the flow rate threshold value, generating a control instruction for maintaining a flow rate of the pressure independent control valve.

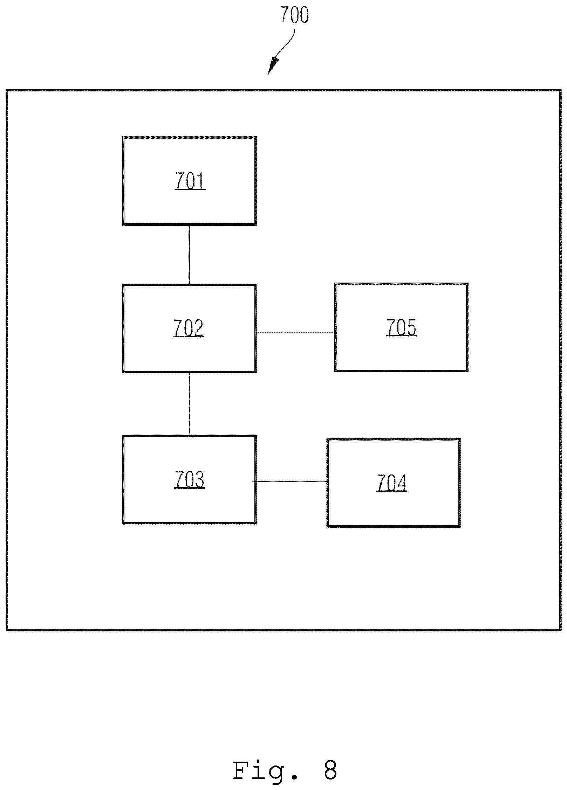

Fig. 8 is a structural diagram of an apparatus for determining a parameter relationship of a pressure independent control valve according to an embodiment of the present invention.

As shown in Fig. 8, the apparatus 700 includes: a first determination module 701 configured to determine an actual value of a mechanical structure parameter and an actual value of a controlled pressure difference parameter of the pressure independent control valve; an input module 702 configured to input the actual value of the mechanical structure parameter and the actual value of the controlled pressure difference parameter into a calibration model, the calibration model being adapted to determine a correlation between a flow rate parameter and a pressure difference parameter of the pressure independent control valve on the basis of the mechanical structure parameter and the controlled pressure difference parameter; and a receiving module 703 configured to receive the correlation between the flow rate parameter and pressure difference parameter from the calibration model.

In an embodiment, the apparatus 700 includes: a second determination module 704 configured to: determine a current value of the pressure difference parameter when a current value of the mechanical structure parameter is equal to the actual value of the mechanical structure parameter; and input the current value of the pressure difference parameter into the correlation to determine a current value of the flow rate parameter.

In an embodiment, the calibration model includes at least one of the following: a trained AI model adapted to predict the correlation on the basis of the mechanical structure parameter and the controlled pressure difference parameter; and a mechanism model adapted to infer the correlation on the basis of the mechanical structure parameter and the controlled pressure difference parameter.

In an embodiment, the mechanical structure parameter includes a preset opening parameter, a position parameter of an actuator and a position parameter of a pressure-balanced valve plug, and the apparatus 700 includes: a training module 705 configured to perform a training process of the AI model, the training process including: determining training samples including training data and a label, wherein training data includes a sample value of the preset opening parameter, a sample value of the position parameter of the actuator, a sample value of the position parameter of the pressure-balanced valve plug, and a sample value of the controlled pressure difference parameter, and the label includes a labeled value of the flow rate parameter and a labeled value of the pressure difference parameter; inputting the training samples into a neural network model; receiving a predicted value of the flow rate parameter and a predicted value of the pressure difference parameter from the neural network model; on the basis of the predicted value of the flow rate parameter, the predicted value of the pressure difference parameter, the labeled value of the flow rate parameter, and the labeled value of the pressure difference parameter, determining a loss function value of the neural network model; and configuring model parameters of the neural network model so that the loss function value is lower than a preset threshold.

In an embodiment, the training module 705 is configured to: on the basis of the sample value of the position parameter of the actuator, the sample value of the preset opening parameter, and the sample value of the position parameter of the pressure-balanced valve plug, determine a three-dimensional model for the pressure independent control valve; on the basis of the labeled value of the pressure difference parameter, perform a CFD simulation on the three-dimensional model to determine the labeled value of the flow rate parameter; on the basis of the CFD simulation, determine a first force of the pressure-balanced valve plug in a Z-axis direction and a second force of the pressure-balanced valve plug in an X-axis direction, wherein the Z-axis is a symmetry axis direction of the pressure-balanced valve plug, and the X-axis is a medium flow direction of the pressure independent control valve; determine a resultant force of the first force and second force; and determine a sample value of the controlled pressure difference parameter on the basis of the resultant force and a pressure-bearing area of the pressure-balanced valve plug.

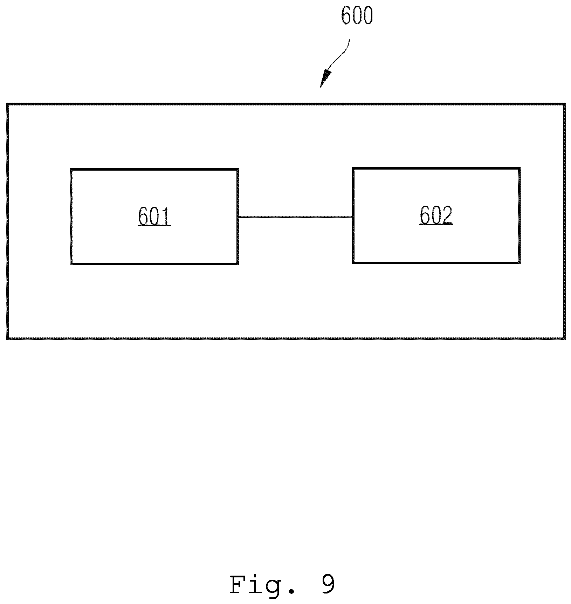

An embodiment of the present invention further provides an electronic device with processor-memory architecture. Fig. 9 is a structural diagram of the electronic device according to the embodiment of the present invention.

As shown in Fig. 9, the electronic device 600 having the processor-memory architecture includes a processor 601, a memory 602, and a computer program stored in the memory 602 and executable on the processor 601. When the computer program is executed by the processor 601, any one of the methods for determining the parameter relationship of the pressure independent control valve described above is implemented. The memory 602 may be specifically implemented as a variety of storage media such as an Electrically Erasable Programmable Read-Only Memory (EEPROM), a flash memory, and a Programmable Program Read-Only Memory (PROM). The processor 601 may be implemented as including one or more central processing units or one or more field-programmable gate arrays, wherein one or more central processing unit cores are integrated into the field-programmable gate array. Specifically, the central processing unit or the central processing unit core may be implemented as a CPU, an MCU, a DSP or the like.

It should be noted that not all steps and modules in the above processes and structure diagrams are necessary, and some steps or modules may be ignored according to actual needs. The execution order of various steps is not fixed and may be adjusted as needed. The division of various modules is only for the convenience of describing the functional division adopted. In actual implementation, a module may be implemented by multiple modules, and the functions of multiple modules may also be implemented by the same module. These modules may be located in the same device or in different devices.

The hardware modules in various embodiments may be implemented mechanically or electronically. For example, a hardware module may include a specially designed permanent circuit or logic device (such as a dedicated processor, such as an FPGA or ASIC) to perform a specific operation. The hardware module may also include a programmable logic device or circuit (such as a general-purpose processor or another programmable processor) temporarily configured by software to perform a specific operation. As for whether to specifically implement the hardware module mechanically, or using a dedicated permanent circuit, or using a temporarily configured circuit (such as configured by software), it can be decided according to cost and time considerations.

Only the preferred embodiments of the present invention have been described above and are not intended to limit the scope of protection of the present invention. Any modifications, equivalent replacements, improvements, etc. made within the spirit and principle of the present invention shall be included in the scope of protection of the present invention.

## Claims

1. A method for determining a parameter relationship of a pressure independent control valve, **characterized by** comprising:
determining (101) an actual value of a mechanical structure parameter and an actual value of a controlled pressure difference parameter of the pressure independent control valve;
inputting (102) the actual value of the mechanical structure parameter and the actual value of the controlled pressure difference parameter into a calibration model, the calibration model being adapted to determine a correlation between a flow rate parameter and a pressure difference parameter of the pressure independent control valve on the basis of the mechanical structure parameter and the controlled pressure difference parameter; and
receiving (103) the correlation between the flow rate parameter and the pressure difference parameter from the calibration model.

2. The method as claimed in claim 1, **characterized by** comprising:
determining a current value of the pressure difference parameter when a current value of the mechanical structure parameter is equal to the actual value of the mechanical structure parameter; and
inputting the current value of the pressure difference parameter into the correlation to determine a current value of the flow rate parameter.

3. The method as claimed in claim 1, **characterized in that** the calibration model comprises at least one of the following:
a trained artificial intelligence model adapted to predict the correlation on the basis of the mechanical structure parameter and the controlled pressure difference parameter; and
a mechanism model adapted to infer the correlation on the basis of the mechanical structure parameter and the controlled pressure difference parameter.

4. The method as claimed in claim 3, **characterized in that** the mechanical structure parameter comprises a preset opening parameter, a position parameter of an actuator and a position parameter of a pressure-balanced valve plug, the method comprises a training process of the artificial intelligence model, and the training process comprises:
determining training samples comprising training data and a label, wherein the training data comprises a sample value of the preset opening parameter, a sample value of the position parameter of the actuator, a sample value of the position parameter of the pressure-balanced valve plug, and a sample value of the controlled pressure difference parameter, and the label comprises a labeled value of the flow rate parameter and a labeled value of the pressure difference parameter;
inputting the training samples into a neural network model;
receiving a predicted value of the flow rate parameter and a predicted value of the pressure difference parameter from the neural network model;
on the basis of the predicted value of the flow rate parameter, the predicted value of the pressure difference parameter, the labeled value of the flow rate parameter, and the labeled value of the pressure difference parameter, determining a loss function value of the neural network model; and
configuring model parameters of the neural network model so that the loss function value is lower than a preset threshold.

5. The method as claimed in claim 4, **characterized by** comprising:
on the basis of the sample value of the position parameter of the actuator, the sample value of the preset opening parameter, and the sample value of the position parameter of the pressure-balanced valve plug, determining a three-dimensional model for the pressure independent control valve; and
on the basis of the labeled value of the pressure difference parameter, performing a computational fluid dynamics simulation on the three-dimensional model to determine the labeled value of the flow rate parameter.

6. The method as claimed in claim 5, **characterized by** comprising:
on the basis of the computational fluid dynamics simulation, determining a first force of the pressure-balanced valve plug in a Z-axis direction and a second force of the pressure-balanced valve plug in an X-axis direction, wherein the Z-axis is a symmetry axis direction of the pressure-balanced valve plug, and the X-axis is a medium flow direction of the pressure independent control valve;
determining a resultant force of the first force and the second force; and
determining a sample value of the controlled pressure difference parameter on the basis of the resultant force and a pressure-bearing area of the pressure-balanced valve plug.

7. The method as claimed in claim 6, **characterized by** comprising:
inputting the sample value of the controlled pressure difference parameter into a trained artificial intelligence model adapted to correct the controlled pressure difference parameter;
receiving a corrected sample value of the controlled pressure difference parameter from the artificial intelligence model; and
on the basis of the corrected sample value of the controlled pressure difference parameter, updating the sample value of the controlled pressure difference parameter.

8. The method as claimed in any one of claims 3 to 7, **characterized by** comprising:
changing the actual value of the mechanical structure parameter and the actual value of the controlled pressure difference parameter N times, where N is a positive integer of at least **1;**
inputting the actual value of the mechanical structure parameter and the actual value of the controlled pressure difference parameter after each change into the trained artificial intelligence model;
receiving, from the artificial intelligence model, N changed correlations between the flow rate parameter and the pressure difference parameter that are obtained by N predictions; and
on the basis of the N changed correlations and the correlation, fitting a polynomial expression with the flow rate parameter as a dependent variable, and the pressure difference parameter, the preset opening parameter and the position parameter of the actuator as dependent variables.

9. The method as claimed in claim 8, **characterized by** comprising:
extracting coefficients of the polynomial expression; and
generating a two-dimensional code comprising the coefficients.

10. The method as claimed in claim 8, **characterized by** comprising:
determining a current value of the pressure difference parameter, a current value of the preset opening parameter, and a current value of the position parameter of the actuator; and
inputting the current value of the pressure difference parameter, the current value of the preset opening parameter and the current value of the position parameter of the actuator into the polynomial expression to determine a current value of the flow rate parameter.

11. The method as claimed in claim 10, **characterized by** comprising:
scanning the two-dimensional code comprising the coefficients of the polynomial expression to obtain the coefficients; and
substituting the coefficients into a general formula of the polynomial expression to determine the polynomial expression.

12. An apparatus for determining a parameter relationship of a pressure independent control valve, **characterized by** comprising:
a first determination module (701) configured to determine an actual value of a mechanical structure parameter and an actual value of a controlled pressure difference parameter of the pressure independent control valve;
an input module (702) configured to input the actual value of the mechanical structure parameter and the actual value of the controlled pressure difference parameter into a calibration model, the calibration model being adapted to determine a correlation between a flow rate parameter and a pressure difference parameter of the pressure independent control valve on the basis of the mechanical structure parameter and the controlled pressure difference parameter; and
a receiving module (703) configured to receive the correlation between the flow rate parameter and the pressure difference parameter from the calibration model.

13. The apparatus as claimed in claim 12, **characterized by** comprising:
a second determination module (704) configured to: determine a current value of the pressure difference parameter when a current value of the mechanical structure parameter is equal to the actual value of the mechanical structure parameter; and input the current value of the pressure difference parameter into the correlation to determine a current value of the flow rate parameter.

14. A control system for a pressure independent control valve, **characterized by** comprising:
a control subsystem (90) configured to: determine an actual value of a mechanical structure parameter and an actual value of a controlled pressure difference parameter of the pressure independent control valve; input the actual value of the mechanical structure parameter and the actual value of the controlled pressure difference parameter into a calibration model, the calibration model being adapted to determine a correlation between a flow rate parameter and a pressure difference parameter of the pressure independent control valve on the basis of the mechanical structure parameter and the controlled pressure difference parameter; and receive the correlation between the flow rate parameter and the pressure difference parameter from the calibration model; and generate a control instruction for the pressure independent control valve on the basis of the correlation; and
an actuator (91) configured to control the pressure independent control valve on the basis of the control instruction.

15. An electronic device, **characterized by** comprising a processor (601) and a memory (602);
wherein the memory (602) stores an application program executable by the processor (601), and the application program is used to cause the processor (601) to perform the method for determining the parameter relationship of the pressure independent control valve as claimed in any one of claims 1 to 11.
